# EUROPÄISCHE PATENTANMELDUNG

(11) **EP 2 236 263 A2**
(43) Veröffentlichungstag der Anmeldung: **06.10.2010**
(21) Anmeldenummer: 10156077.9
(22) Anmeldetag: 10.03.2010
(51) Int. Cl.: B29C 45/00, B29C 45/04, B29C 45/16, B29C 45/56, B29C 45/26

(54) **Spritzgießwerkzeug und Spritzgießverfahren zur Herstellung mehrteiliger Formteile**

(30) Priorität: 31.03.2009 DE 102009015138
(71) Anmelder: Robust Plastics GmbH, 1220 Wien (AT)
(72) Erfinder: Butsch, Erwin, 71364 Winnenden (DE)
(74) Vertreter: Kohlmann, Kai

(57) **Zusammenfassung**

Die Erfindung betrifft ein Spritzgießverfahren zur Herstellung mehrteiliger Formteile aus Kunststoffkomponenten mit unterschiedlichen Eigenschaften mit einem Spritzgießwerkzeug, das eine Formplatte auf der Ausstoßseite und eine Formplatte auf der Angussseite aufweist.

Um ein Verfahren und ein Spritzgießwerkzeug zur Durchführung des Verfahrens vorzuschlagen, mit dem ein dreiteiliges Formteil in kürzerer Zeit und mit geringeren Kosten herstellbar ist wird vorgeschlagen, dass ein Außenteil des Formteils in der Kavität auf der Angussseite und ein Innenteil in der Kavität der Ausstoßseite eines Spritzgießwerkzeugs gespritzt wird, wobei die Ausstoßseite gegenüber der ortsfesten Angußseite derart beweglich angeordnet ist, dass die Kavität für das Innenteil mit der Kavität für das Außenteil in Überdeckung bringbar ist.

Vorzugsweise erfolgt dies durch eine Drehung der beweglichen Ausstoßseite um eine senkrecht zur Trennebene zwischen Anguss- und Ausstoßseite verlaufende Schwenkachse. Mindestens ein weiterer Hohlraum in der Kavität der Ausstoßseite wird sodann von mindestens einen Schieber freigeben. In jedem freigegebenen weiteren Hohlraum wird ein das Innenteil mit dem Außenteil verbindendes Verbindungsteil gespritzt

## Beschreibung

Die Erfindung betrifft ein Spritzgießverfahren zur Herstellung mehrteiliger Formteile aus Kunststoffkomponenten mit unterschiedlichen Eigenschaften mit einem Spritzgießwerkzeug, das eine Formplatte auf der Ausstoßseite und eine Formplatte auf der Angußseite aufweist. Außerdem betrifft die Erfindung ein Spritzgießwerkzeug zur Durchführung des Verfahrens.

Mit dem auch als Mehrkomponentenspritzgießen bezeichneten Verfahren lassen sich Kunststoffkomponenten mit insbesondere unterschiedlichen Eigenschaften in einem Prozessschritt zu komplexen Bauteilen verbinden. Die haftungskompatiblen Kunststoffkomponenten können unterschiedlich sein, sollten jedoch eine gewisse Haftung zueinander aufweisen, wie beispielsweise PP/TPE, PMMA/PC, PMMA/ABS und PC/ABS, ABS/TPE.

Das Mehrkomponentenspritzgießen bietet die Möglichkeit, die Eigenschaften der Formteile durch entsprechende Kombinationen der Kunststoffkomponenten gezielt zu beeinflussen. Insbesondere lassen sich mehrfarbige Formteile in nur einem Spritzgießprozess herstellen. Ein Hauptanwendungsbereich des Mehrkomponentenspritzgießens liegt in der Automobilindustrie, beispielsweise bei der Herstellung von Formteilen mit eingeformten Dichtungen oder mehrfarbiger Formteile, wie beispielsweise Rückleuchten.

Das Verfahrensprinzip zur Herstellung von Formteilen aus haftungskompatiblen Kunststoffkomponenten beruht auf dem sequentiellen Aufeinanderspritzen einer Kunststoffkomponente auf eine bereits erkaltete erste Kunststoffkomponente, die auch als Vorspritzling bezeichnet wird.

Im Einzelnen sind folgende Verfahrensweisen bekannt:

### 1. Umsetztechnik

Umsetzen des unfertigen Vorspritzlings in eine zweite Werkzeugkavität, entweder von Hand oder mittels eines Roboters, wobei die zweite Werkzeugkavität Raum für eine weitere Kunststoffkomponente aufweist.

### 2. Drehtechnik

An einer servo-, elektrisch oder hydraulisch gesteuerten Dreheinheit befinden sich auf der Ausstoßseite zwei Kavitäten. Zunächst wird eine erste Kunststoffkomponente in die erste Kavität eingespritzt. Das Spritzgießwerkzeug wird geöffnet. Die ausstoßseitige Werkzeughälfte mit dem Vorspritzling wird in die nächste Position gedreht.

### 3. Kernrückzugtechnik / Schiebertechnik

In einer Kavität des Spritzgießwerkzeugs befindet sich ein Kern/Schieber, der beim Einspritzen der ersten Kunststoffkomponente in die Kavität hineinragt. Durch Zurückziehen des Kerns/Schiebers wird Platz für die weitere Kunststoffkomponente geschaffen, die anschließend eingespritzt wird.

Allen bekannten Verfahren des Mehrkomponentenspritzgießens ist gemein, dass zunächst ein Vorspritzling hergestellt wird. Nach dem Abkühlen des Vorspritzlings wird dieser in eine zweite Kavität des Spritzgießwerkzeugs eingesetzt oder in derselben Kavität mit der zweiten Kunststoffkomponente überspritzt. Anschließend wird das fertige Teil aus dem Spritzgießwerkzeug ausgestoßen bzw. entnommen.

Das sequentielle Spritzen der ersten und zweiten Kunststoffkomponente nimmt relativ viel Zeit in Anspruch, da mit dem Spritzen der zweiten Kunststoffkomponente erst nach dem Abkühlen des Vorspritzlings begonnen werden kann.

Des Weiteren sind die bisherigen Verfahren in erster Linie dazu bestimmt, zweiteilige Formteile herzustellen, die üblicherweise aus zwei unterschiedlichen Kunststoffkomponenten bestehen.

Ausgehend von dem Stand der Technik liegt der Erfindung die Aufgabe zu Grunde, ein Verfahren und ein Spritzgießwerkzeug zur Durchführung des Verfahrens vorzuschlagen, mit dem ein dreiteiliges Formteil in kürzerer Zeit und mit geringeren Kosten herstellbar ist.

Das herzustellende Formteil weist ein Außenteil, ein Innenteil und einen das Innen- mit dem Außenteil verbindendes Verbindungsteil auf, insbesondere in Form eines um das Innenteil herum verlaufenden Randes.

Die Aufgabe wird bei einem Spritzgießverfahren der eingangs erwähnten Art dadurch gelöst, dass ein Außenteil des Formteils in einer Kavität der Angußseite und ein Innenteil des Formteils in einer Kavität der Ausstoßseite gespritzt werden, wobei während des Spritzens des Innenteils mindestens ein weiterer Hohlraum in der Kavität der Ausstoßseite durch mindestens einen Schieber blockiert ist, das Spritzgießwerkzeug geöffnet und die Kavität der Ausstoßseite über die Kavität der Angussseite bewegt wird, wobei das Außenteil und das Innenteil in ihren Kavitäten verbleiben, der weitere Hohlraum in der Kavität der Ausstoßseite von dem mindestens einen Schieber freigeben wird, in jedem freigegebenen weiteren Hohlraum ein das Innenteil mit dem Außenteil verbindendes Verbindungsteil gespritzt wird, das Spritzgießwerkzeug geöffnet und das Formteil ausgestoßen und/oder entnommen wird.

Ein vorteilhaftes Spritzgießwerkzeug zur Durchführung des Verfahrens weist die Merkmale des unabhängigen Anspruchs 6 auf.

In einem ersten Schritt wird das Innen- und Außenteil des mehrteiligen Formteils in gegenüberliegenden Formplatten zeitgleich in unterschiedliche Kavitäten eingespritzt.

Während des Spritzens wird in der Kavität auf der Ausstoßseite mittels der an sich bekannten Schiebertechnik ein weiterer Hohlraum der Kavität für das dritte Teil des mehrteiligen Formteils, nämlich das Verbindungsteil, blockiert.

Durch das zeitgleiche Spritzen des Innen- und Außenteils des Formteils können diese zeitgleich abkühlen, insbesondere während das Spritzgießwerkzeug geöffnet und die Kavität der Ausstoßseite mit dem darin gehaltenen Innenteil über die Kavität der Angussseite bewegt wird.

Nachdem der weitere Hohlraum in der Kavität der Ausstoßseite durch Zurückziehen jedes in die Kavität ragenden Schiebers freigegeben wird, wird nach dem Abkühlen des Innen- und Außenteils das Verbindungsteil gespritzt. Sodann wird das fertige Formteil aus dem geöffneten Spritzgießwerkzeug ausgestoßen und entnommen.

Mit dem erfindungsgemäßen Verfahren lassen sich vorteilhaft Einstiegsleisten für Türen von Kraftfahrzeugen mit einem beleuchteten Schriftzug herstellen. Das Außenteil ist in diesem Fall ein Leuchtsymbol, in das die Beschriftung eingearbeitet ist. Das Innenteil ist in diesem Fall ein Lichtleiter, in den eine Streuoptik für stirnseitig zum Lichtleiter angeordnete Lichtquellen eingearbeitet ist.

Ein umlaufender, beispielsweise weißer Rand, verbindet den Lichtleiter und das Leuchtsymbol und unterstützt durch zusätzlich, an der Stirnseite des Lichtleiters angeordnete Rippen, die Funktion des Lichtleiters.

Beim Öffnen des Spritzgießwerkzeugs wird vorzugsweise mit Hilfe von Unterdruck sichergestellt, dass das Außenteil in der Kavität auf der Angußseite und das Innenteil in der Kavität auf der Ausstoßseite gehalten wird, während die Kavitäten in Überdeckung gebracht werden. Außerdem oder alternativ können mechanische Rückhaltesysteme dafür sorgen, dass der Vorspritzling in der richtigen Kavität in der Formplatte verbleibt.

In vorteilhafter Ausgestaltung der Erfindung wird die Kavität der Ausstoßseite servo-gesteuert über die Kavität der Angußseite um eine vertikal zu den Oberflächen der Formplatten bzw. zu der Trennebene verlaufende Achse geschwenkt. Die Schwenkachse verläuft insbesondere durch das Zentrum der Formplatten, in denen die Kavitäten symmetrisch zur Schwenkachse angeordnet sind. Die Lage der Schwenkachse des Werkzeugs kann horizontal oder senkrecht im Raum ausgerichtet sein.

Eine andere Möglichkeit die Kavität der Ausstoßseite über die Kavität der Angussseite zu bringen besteht darin, dass die Kavität der Ausstoßseite parallel zu den Oberflächen der Formplatten bzw. zur Trennebene verschoben wird. Konstruktiv kann dies beispielsweise durch eine Linearführung der Formplatte auf der Ausstoßseite realisiert werden.

Um Formteile mit sehr guten Oberflächeneigenschaften und geringer mechanischer Anisotropie zu schaffen, erfolgt zumindest das Einspritzen der Kunststoffschmelze in die Kavität der Angussseite und in die Kavität der Ausstoßseite zum Spritzen des Außen- und Innenteils des Formteils im Wege des Spritzprägens. Vorzugsweise wird auch das Verbindungsteil im Wege des Spritzprägens hergestellt. Beim Spritzprägen wird die Kunststoffschmelze in das praktisch drucklose, nicht völlig geschlossene Spritzgießwerkzeug eingespritzt. Erst während des Abkühlens, das heißt beim Erstarrungsvorgang, wird das Spritzgießwerkzeug vollständig geschlossen. Der sich dabei aufbauende gleichmäßige Schließdruck sorgt für die endgültige Ausformung des Formteiles. Um ein Austreten der Kunststoffschmelze in der Trennebene zwischen den nicht vollständig geschlossenen Formplatten des Spritzgießwerkzeugs zu verhindern, umgibt ein vertikal zur Oberfläche der Formplatte auf der Ausstoßseite und ein vertikal zur Oberfläche der Formplatte auf der Angußseite geführter Rahmen, jeweils die in der Trennebene des Spritzgießwerkzeugs liegende Öffnung der Kavität. Beide Rahmen sind in Richtung der gegenüberliegenden Formplatte mit einer Kraft beaufschlagt. Vorzugsweise sind die Rahmen federnd gelagert.

Dekorative Effekte lassen sich erzielen, wenn zwischen dem Außenteil und dem Innenteil ein Einleger eingebracht wird. Durch das zumindest teilweise transparente Außenteil ist der Einleger sichtbar und zugleich geschützt. Der Einleger ist insbesondere eine Folie, die eingefärbt und/oder bedruckt und/oder mit Funktionselementen, wie beispielsweise lichtdurchlässigen Öffnungen oder Unterbrechungen versehen ist; sie kann aus Kunststoff und/oder Metall und/oder anderen Folienmaterialien bestehen. Die Folie kann auch elektrische Eigenschaften aufweisen und beispielsweise als eine Elektrolumineszenz-Folie ausgestaltet sein, die elektrische Energie in Licht umwandelt. Als Einleger kommen jedoch auch ebene Strukturteile beispielsweise aus Holz, Holzimitat oder Metall in Betracht. Durch das Einbringen von derartigen Einlegern lassen sich in einem Arbeitsgang Dekorblenden herstellen, wobei sich durch das Außenteil eine große Tiefenwirkung ergibt.

Der Einleger wird beispielsweise mit Hilfe eines Roboters vor dem Spritzen des Außen- und Innenteils zwischen der Ausstoßseite und der Kavität der Angußseite eingebracht und anschließend das Außenteil hinterspritzt.

Eine andere Möglichkeit zum Einbringen des Einlegers ergibt sich nach dem Spritzen des Außen- und Innenteils und dem Öffnen des Spritzgießwerkzeugs, jedoch vor dem Spritzen des Verbindungsteils zwischen Außen- und Innenteil. Dabei ist kein direkter Materialverbund des Einlegers zu dem Außen- und/oder Innenteil erforderlich.

Nachfolgend wird das erfindungsgemäße Verfahren sowie das zu dessen Durchführung erforderliche Spritzgießwerkzeug anhand der Figuren näher erläutert. Es zeigen:

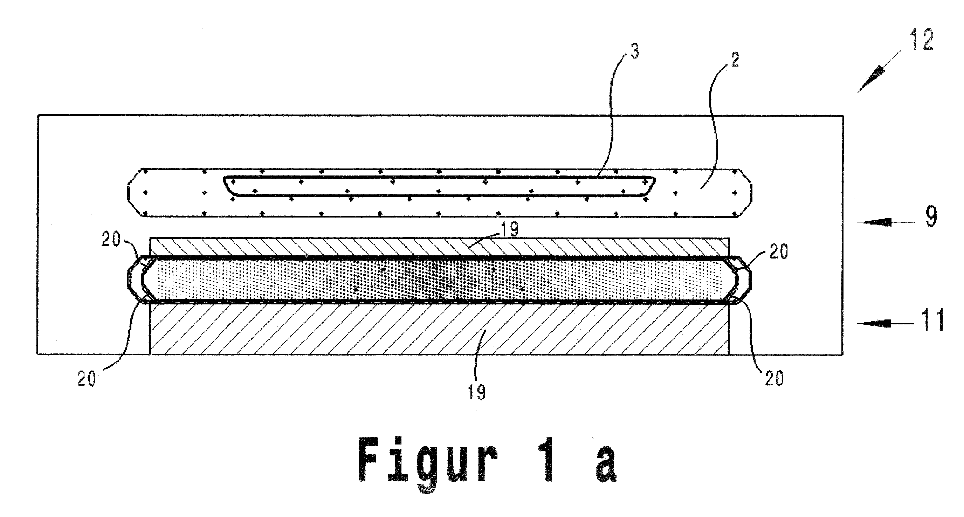

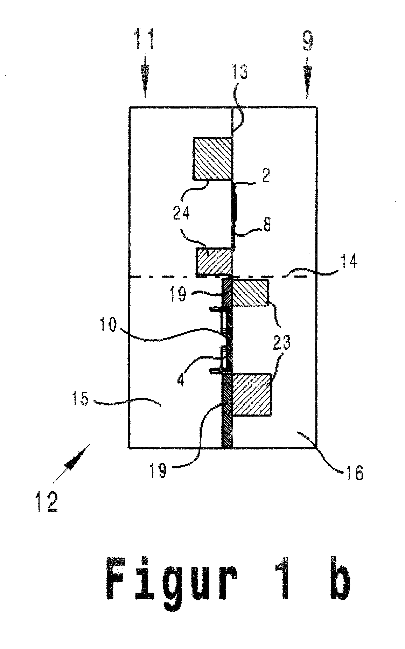

- **Figur 1 a**: einen schematischen Schnitt durch das erfindungsgemäße Spritzgießwerkzeug, wobei der Schnitt in der unteren Bildhälfte durch die Kavität in der Ausstoßseite der Formplatte und in der oberen Bildhälfte durch die Kavität in der Angußseite der Formplatte des Spritzgießwerkzeugs verläuft,
- **Figur 1 b**: einen schematischen Querschnitt durch das Spritzgießwerkzeug nach Figur 1 a mit horizontal verlaufender Schwenkachse für die Formplatte auf der Ausstoßseite,
- **Figur 2 a**: einen schematischen Schnitt entsprechend Figur 1 a durch die Kavität in der Ausstoßseite des Spritzgießwerkzeugs nach dem Schwenken der Formplatte,

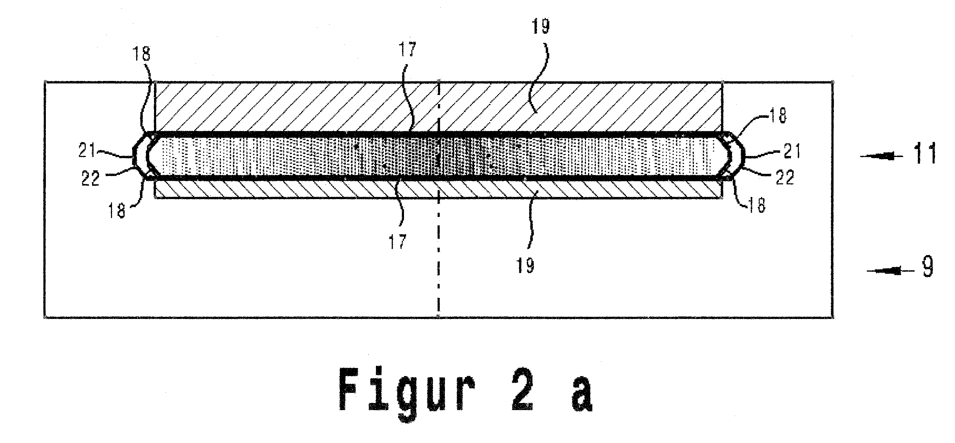

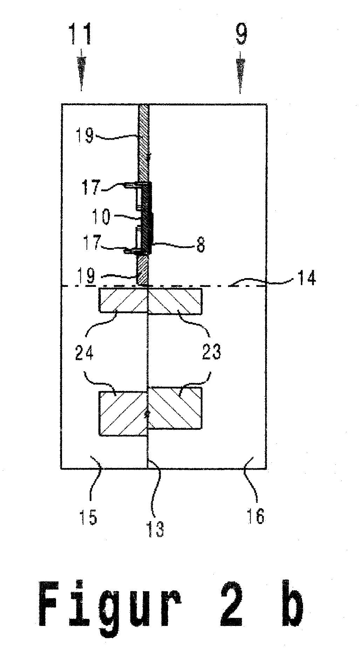

- **Figur 2 b**: einen schematischen Querschnitt durch das Spritzgießwerkzeug entsprechend Figur 1 b nach dem Schwenken der Formplatte auf der Ausstoßseite,

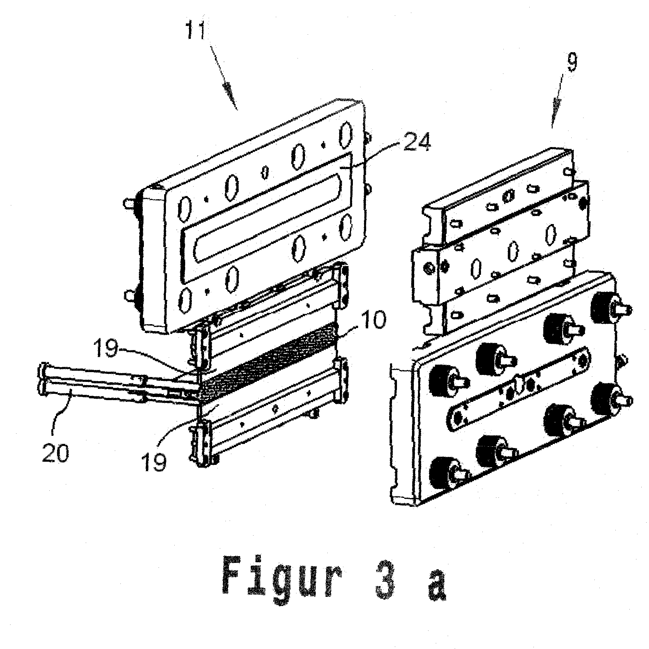

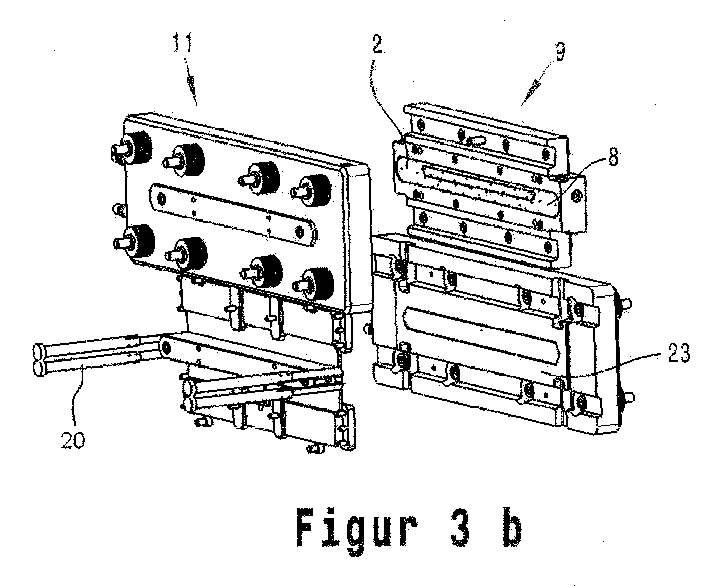

- **Figuren 3 a, b**: perspektivische Ansichten des Spritzgießwerkzeugs entsprechend Figur 1 b,

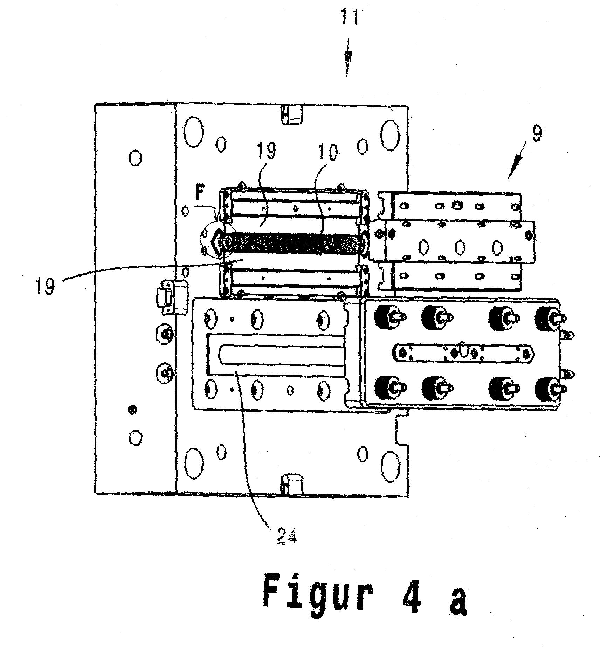

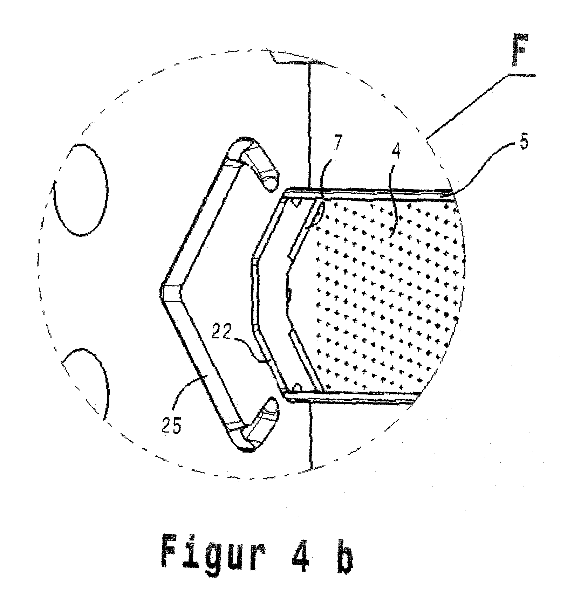

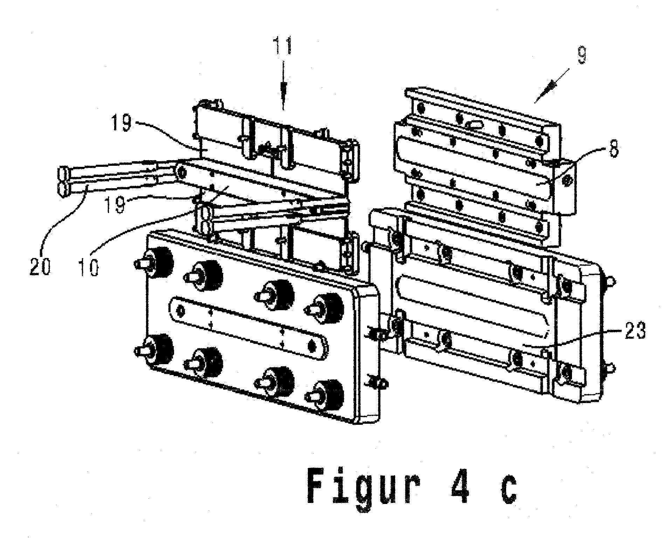

- **Figuren 4 a, c**: perspektivische Ansichten des Spritzgießwerkzeugs entsprechend Figur 2 b,
- **Figur 4 b**: eine Darstellung des Details F aus Figur 4 a,

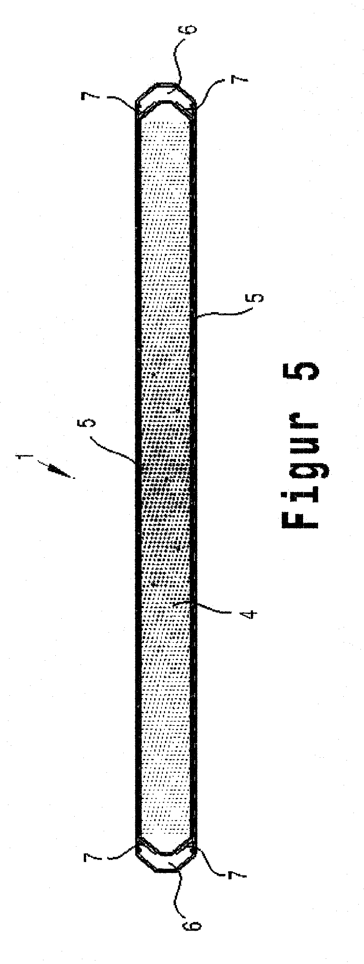

- **Figur 5**: eine Darstellung des mit dem Spritzgießwerkzeug hergestellten Formteils sowie

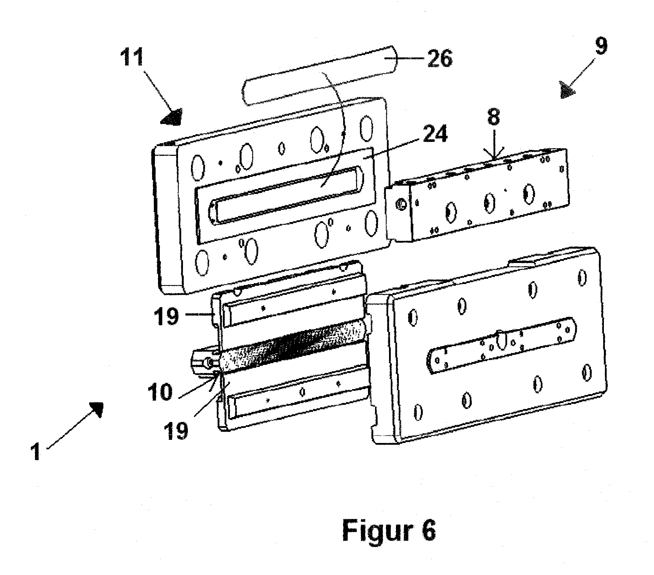

- **Figur 6**: eine perspektivische Ansicht des Spritzgießwerkzeugs entsprechend Figur 1 b vor dem Einbringen eines Einlegers sowie

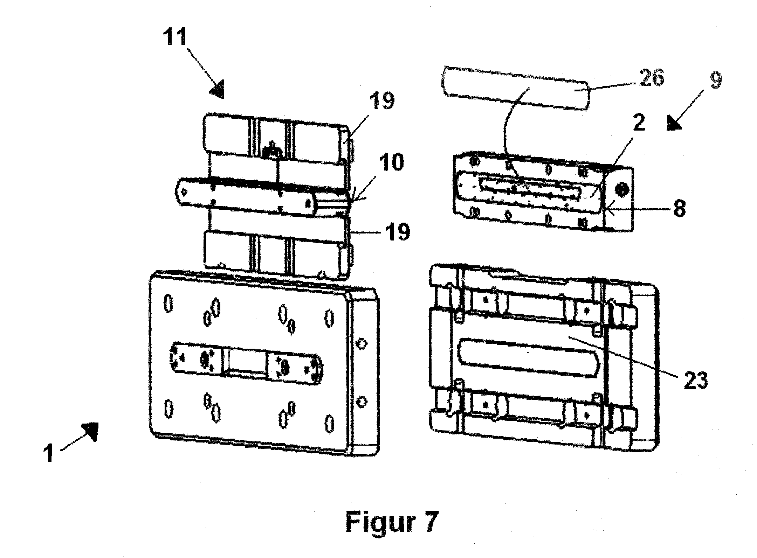

- **Figur 7**: eine perspektivische Ansicht des Spritzgießwerkzeugs entsprechend Figur 2 b vor dem Einbringen eines Einlegers.

Das erfindungsgemäße Verfahren wird an Hand der Herstellung einer aus drei Teilen bestehenden Einstiegsleiste (1) für Kraftfahrzeuge näher erläutert (vgl. Figur 5), an deren Oberfläche sich linienförmige Lichteffekte sichtbar machen lassen. An der nach außen weisenden Oberfläche weist die Einstiegsleiste (1) ein plattenförmiges Leuchtsymbol-Teil, nachfolgend als Außenteil (2) bezeichnet, auf. Das Außenteil (2) besteht aus transparentem Kunststoff. Mit Ausnahme desjenigen Bereichs (3), wo die linienförmigen Lichteffekte sichtbar sein sollen, ist die Oberfläche des Außenteils (2) mittels einer lichtundurchlässigen, auch metallischen Folie abgedeckt. Auf der Unterseite, der Lichtleiter zugewandten Seite, des Leuchtsymbol-Teiles kann auch eine zusätzliche Streuoptik, in Form von thorischen Linsen, zur Homogenisierung der Lichtverteilung, angeordnet sein.

Unterhalb des Außenteils (2) befindet sich ein plattenförmiger Lichtleiter mit einer Streuoptik, nachfolgend als Innenteil (4) bezeichnet. Das Innenteil (4) wird von einem umlaufenden Rand, nachfolgend auch als Verbindungsteil (5) bezeichnet, eingefasst, der auf der Unterseite des Außenteils (2) randnah aufsetzt. Das Innenteil (4) weist gegenüber dem Außenteil (2) eine geringere Längserstreckung auf, so dass zwischen dem umlaufenden Rand und den Stirnseiten des Innenteils (4) jeweils ein Aufnahmebereich (6) für eine Leuchtdiode und die diese ansteuernde Elektronik geschaffen wird. Das Licht der Leuchtdioden wird seitlich in die Stirnseiten des Innenteils (4) eingekoppelt und über die Streuoptik in Richtung der Oberfläche des transparenten Außenteils (2) umgelenkt, so dass es an dessen Oberfläche als linienförmiger Lichteffekt in dem Bereich (3) in Erscheinung tritt. Teilbereiche der Stirnseiten des Innenteils (4) sind durch an dem umlaufenden Rand bzw. dem Verbindungsteil (5) angeformte Rippen (7) abgedeckt, um eine gezielte Einkopplung des Lichts von den Leuchtdioden zu ermöglichen. Der umlaufende Rand und die Rippen (7) sind weiß eingefärbt, um eine möglichst vollständige Reflektion des eingekoppelten Lichts in dem Innenteil zu gewährleisten.

Das erfindungsgemäße Verfahren basiert im wesentlichen darauf, dass das Außenteil (2) in der Kavität (8) auf der Angußseite (9) und das Innenteil (4) in der Kavität (10) der Ausstoßseite (11) eines Spritzgießwerkzeugs (12) gespritzt wird, wobei die Ausstoßseite (11) gegenüber der ortsfesten Angußseite (9) derart beweglich angeordnet ist, dass die Kavität (10) für das Innenteil (4) mit der Kavität (8) für das Außenteil (2) in Überdeckung bringbar ist. Vorzugsweise erfolgt dies durch eine Drehung der beweglichen Ausstoßseite (11) um eine senkrecht zur Trennebene (13) zwischen Anguß- und Ausstoßseite (9, 11) verlaufende Schwenkachse (14).

Nach dem Drehen der Formplatte (15) auf der Ausstoßseite (11) wird der Hohlraum (17, 18) für den zu spritzenden Rand (5) durch Zurückziehen von Schiebern (19, 20), die die Kavität (4) auf der Ausstoßseite (11) begrenzen, gebildet. Der Verfahrweg des Schiebers (19) in der Ebene der Formplatte (15) bestimmt die Stärke des das Innenteil (4) einfassenden Randes (5), der auf der Unterseite des Außenteils (2) aufliegt. Die in Figur 1 a dargestellten zungenförmigen Schieber (20) werden etwa senkrecht zur Bildebene zurückgezogen und geben den Hohlraum (18) für das Spritzen der stirnseitig an dem Innenteil (4) anliegenden Rippen (7) frei. Gleichzeitig werden die stirnseitigen Randbereiche (21,22), in denen das Außenteil (2) das Innenteil (4) überragt, mittels einer dafür vorgesehenen Kavität in der Ausstoßseite (11) an die zur Ausstoßseite (11) weisende Unterseite des Außenteils (2) gespritzt. Um das Anspritzen des Randes (5) zu gewährleisten, müssen die Kunststoffe miteinander verbindbar sein, z. B. amorphe oder polykristalline Thermoplaste.

Sowohl das Außen- als auch das Innenteil (2, 4) werden vorzugsweise im Wege des Spritzprägens hergestellt. Dabei handelt es sich um ein an sich bekanntes Spritzgießverfahren, bei dem weniger innere Spannungen in dem gespritzten Teil auftreten. Für optische Formteile, wie die beschrieben Einstiegleiste (1), ist dieses Verfahren zu bevorzugen. Beim Spritzprägen ist konstruktionsbedingt beim Einspritzen des flüssigen Kunststoffs eine Öffnung des Werkzeugs um beispielsweise einige Millimeter zulässig. Die notwendige Abdichtung der Kavität (8, 10) gegen die jeweils gegenüberliegende Formplatte (15, 16) wird durch einen gefederten Rahmen (23, 24) gewährleistet, der in der der Kavität (8, 10) gegenüberliegenden Formplatte (15,16) gelagert ist. Alternativ kann der Rahmen eine hydraulische Trennebenen- Steuerung aufweisen. Nach dem geringfügigen Öffnen beim Einspritzvorgang wird das Spritzgießwerkzeug (1) vollständig für die Nachdrückphase geschlossen.

Das Spritzgießverfahren läuft mit dem beschriebenen Spritzgießwerkzeug (12) wie folgt ab:
Zunächst befindet sich das Spritzgießwerkzeug (12) in der in Figuren 1 a, b dargestellten Ausgangsposition. In dieser Ausgangsposition werden das Außenteil (2) der dreiteiligen Einstiegsleiste (1) in der Kavität (8) der Angussseite (9) und das Innenteil (4) in der Kavität (10) der Ausstoßseite (11) gespritzt. Während des Spritzens von Außen- und Innenteil (2,4) wird durch die in die Kavität (10) der Ausstoßseite (11) eingefahrenen Schieber (19,20) der weitere Hohlraum (17, 18) zur späteren Ausbildung des Verbindungsteils (5) in Form des Randes sowie der Rippen (7) blockiert.

In einem nächsten Verfahrensschritt wird das Spritzgießwerkzeug (12) geöffnet, indem die beiden Formplatten (15, 16) senkrecht zur Trennebene (13) voneinander wegbewegt werden. Dabei wird durch auf das Außen- und Innenteil (2, 4) in den Kavitäten (8, 10) wirkenden Unterdruck sichergestellt, dass das Innen- und Außenteil in den Kavitäten gehalten werden. Nach dem Öffnen dreht die auf der Ausstoßseite (11) angeordnete Formplatte (15) mit Hilfe eines insbesondere servo-gesteuerten Antriebs des Spritzgießwerkzeugs (12) um die Schwenkachse (14) in die in Figuren 2 a, b dargestellte Position, wobei die Kavität (10) der Ausstoßseite (11) über die Kavität (8) der Angussseite (9) gelangt. Die weiteren Hohlräume (17, 18) werden nunmehr durch Zurückziehen der Schieber (19, 20) freigegeben, um den Rand als Verbindungsteil (5) zwischen dem Außen- und Innenteil (2, 4) sowie die Rippen (7) zu spritzen.

Vor dem Spritzen werden die beiden Formplatten (15, 16) wie beim Spritzprägen üblich, teilweise geschlossen, wobei der Spalt in der Trennebene (13) zwischen den Formplatten (15, 16) durch die federnden Rahmen (23, 24) abgedichtet wird.

Anschließend wird in der Nachdrückphase das Spritzgießwerkzeug (12) entgegen der Kraft der Federn der Rahmen (23, 24) vollständig geschlossen. Schließlich kann das aus drei Teilen bestehende Formteil (1) nach dem Öffnen des Spritzgießwerkzeugs (12) mit Ausstoßern ausgestoßen und beispielsweise mittels eines Handhabungsroboters entnommen werden.

In Figur 2 b ist erkennbar, dass sich beim Spritzen des Verbindungsteils (5) die gefederten Rahmen (23, 24) der beiden wieder geschlossenen Formplatten (15, 16) funktionslos gegenüber liegen.

Figur 4 b zeigt den Angusskanal (25) für die Zufuhr der Kunststoffschmelze zu dem Rand zwischen Außen- und Innenteil (2, 4) sowie zum Einspritzen der Kunststoffschmelze in die Rippen (7), sobald die Schieber (19, 20) zurückgezogen wurden.

Um dekorative Effekte zu erzielen, wird - wie in Figuren 6 und 7 - dargestellt, zwischen dem Außenteil (2) und dem Innenteil (4) ein Einleger (26) eingebracht wird. Der Einleger (26) ist beispielsweise eine Dekorfolie aus Kunststoff, die durch das transparente Außenteil (2) sichtbar und zugleich geschützt ist. Durch das Einbringen von derartigen Einlegern lassen sich in einem Arbeitsgang Dekorblenden herstellen, wobei sich durch das transparente Außenteil (2) eine große Tiefenwirkung ergibt.

Figur 6 zeigt, dass der Einleger (26) mit Hilfe eines nicht dargestellten Roboters vor dem Spritzen des Außen- und Innenteils (2, 4) zwischen der Ausstoßseite (11) und der Kavität (8) der Angußseite (9) in das geöffnete Spritzgießwerkzeug (1) eingebracht wird. Anschließend werden das Außenteil (2) in der Kavität (8) der Angussseite (9) und das Innenteil (4) in der Kavität (10) der Ausstoßseite (11) vorzugsweise im Wege des weiter oben beschriebenen Spritzprägens gespritzt. Hiezu werden die beiden Formplatten (15, 16) wie beim Spritzprägen üblich, teilweise geschlossen, wobei der Spalt in der Trennebene (13) zwischen den Formplatten (15, 16) durch die federnden Rahmen (23, 24) abgedichtet wird. Während des Spritzens von Außen- und Innenteil (2,4) wird auch hier durch die in die Kavität (10) der Ausstoßseite (11) eingefahrenen Schieber (19,20) der weitere Hohlraum (17, 18) zur späteren Ausbildung des Verbindungsteils (5) blockiert. Im nächsten Verfahrensschritt wird, wie weiter oben anhand von Figur 2 b beschrieben, das Verbindungsteil (5) zwischen dem Außen- und Innenteil (2, 4) gespritzt.

Eine andere Möglichkeit zum Einbringen des Einlegers ergibt sich, wie aus Figur 7 ersichtlich, nach dem Spritzen des Außen- und Innenteils (2,4) und dem Öffnen des Spritzgießwerkzeugs (12), jedoch vor dem Spritzen des Verbindungsteils (5). Der Einleger wird nach dem Schwenken der Formplatte (15) auf der Ausstoßseite (11) zwischen die beiden bereits gespritzten, sich gegenüberliegenden Teile (2,4) mittels eines Roboters eingebracht. Die Kavität (10) der Ausstoßseite (11) befindet sich gegenüber der Kavität (8) der Angussseite (9). Das Spritzgießwerkzeug wird geschlossen und die weiteren Hohlräume (17, 18) werden nunmehr durch Zurückziehen der Schieber (19, 20) freigegeben, um das Verbindungsteil (5) zwischen dem Außen- und Innenteil (2, 4) zu spritzen. Der Einleger (26) wird zwischen dem Außen- und Innenteil (2, 4) ohne direkten Materialverbund eingeschlossen.

**Bezugszeichenliste**

| **Nr.** | **Bezeichnung** |
|---|---|
| 1 | Einstiegsleiste |
| 2 | Außenteil |
| 3 | Bereich |
| 4 | Innenteil |
| 5 | Verbindungsteil |
| 6 | Aufnahmebereich |
| 7 | Rippen |
| 8 | Kavität Anguss |
| 9 | Angußseite |
| 10 | Kavität Ausstoß |
| 11 | Ausstoßseite |
| 12 | Spritzgießwerkzeug |
| 13 | Trennebene |
| 14 | Schwenkachse |
| 15 | Formplatte |
| 16 | Formplatte |
| 17 | Hohlraum |
| 18 | Hohlraum |
| 19 | Schieber |
| 20 | Schieber |
| 21 | stirnseitiger Randbereich |
| 22 | stirnseitiger Randbereich |
| 23 | Rahmen |
| 24 | Rahmen |
| 25 | Angusskanal |
| 26 | Einleger |

## Patentansprüche

1. Spritzgießverfahren zur Herstellung mehrteiliger Formteile aus Kunststoffkomponenten mit unterschiedlichen Eigenschaften mit einem Spritzgießwerkzeug, das eine Formplatte auf der Ausstoßseite und eine Formplatte auf der Angußseite aufweist, **dadurch gekennzeichnet, dass**
- ein Außenteil (2) des Formteils (1) in einer Kavität (8) der Angußseite (9) und ein Innenteil (4) des Formteils (1) in einer Kavität (10) der Ausstoßseite (11) gespritzt werden
- wobei während des Spritzens des Innenteils (4) mindestens ein weiterer Hohlraum (17, 18) in der Kavität (10) der Ausstoßseite durch mindestens einen Schieber (19, 20) blockiert ist
- das Spritzgießwerkzeug (12) geöffnet und die Kavität (10) der Ausstoßseite (11) über die Kavität (8) der Angußseite (9) bewegt wird, wobei das Außenteil (2) und das Innenteil (4) in ihren Kavitäten verbleiben,
- jeder weitere Hohlraum (17, 18) in der Kavität (10) der Ausstoßseite (11) von dem mindestens einen Schieber (19, 20) freigeben wird,
- in jedem freigegebenen weiteren Hohlraum (17, 18) ein das Innenteil (4) mit dem Außenteil (2) verbindendes Verbindungsteil (5) gespritzt wird
- das Spritzgießwerkzeug (12) geöffnet und das Formteil (1) ausgestoßen und/oder entnommen wird.

2. Verfahren nach Anspruch 1, **dadurch gekennzeichnet, dass** das Außenteil (2) und das Innenteil (4) bei geöffnetem Spritzgießwerkzeug (12) während der Bewegung der Kavität (10) in der Ausstoßseite (11) in ihren Kavitäten mittels Unterdruck und/oder mechanischen Rückhaltesmitteln gehalten werden.

3. Verfahren nach Anspruch 1 oder 2, **dadurch gekennzeichnet, dass** die Kavität (10) der Ausstoßseite (11) über die Kavität (8) der Angußseite (9) um eine vertikal zu den Oberflächen der Formplatten (15, 16) verlaufende Achse (14) geschwenkt wird.

4. Verfahren nach Anspruch 1 oder 2, **dadurch gekennzeichnet, dass** die Kavität (10) der Ausstoßseite (11) über die Kavität (8) der Angußseite (9) parallel zu den Oberflächen der Formplatten (15, 16) verschoben wird.

5. Verfahren nach einem der Ansprüche 1 bis 4, **dadurch gekennzeichnet, dass** zumindest das Einspritzen der Kunststoffschmelze in die Kavität (8) der Angußseite (9) und in die Kavität (10) der Ausstoßseite (11) zum Spritzen des Außen- und Innenteils (2, 4) im Wege des Spritzprägens erfolgt.

6. Verfahren nach einem der Ansprüche 1 bis 5, **dadurch gekennzeichnet, dass** zwischen dem Außenteil (2) und dem Innenteil (4) ein Einleger (26) eingebracht wird.

7. Verfahren nach Anspruch 6, **dadurch gekennzeichnet, dass** der Einleger (26) vor dem Spritzen des Außen- und Innenteils (2,4) zwischen der Ausstoßseite (11) und der Kavität (8) der Angußseite (9) eingebracht wird.

8. Verfahren nach Anspruch 6, **dadurch gekennzeichnet, dass** der Einleger (26) nach dem Spritzen des Außen- und Innenteils (2,4) und dem Öffnen des Spritzgießwerkzeugs (12) eingebracht wird.

9. Verfahren nach Anspruch 8, **dadurch gekennzeichnet, dass** der Einleger (26) vor dem Spritzen des Verbindungsteils (5) eingebracht wird.

10. Spritzgießwerkzeug zur Durchführung des Verfahrens nach einem der Ansprüche 1 bis 4 mit einer Formplatte auf der Ausstoßseite und einer Formplatte auf der Angußseite, Ausstoßern auf der Ausstoßseite sowie einem Anguss auf der Angußseite, **dadurch gekennzeichnet, dass**
- eine Kavität (8) in der Formplatte (16) auf der Angußseite (9) und eine Kavität (10) in der Formplatte (15) der Ausstoßseite (11) angeordnet ist,
- dass die Formplatte (16) auf der Angußseite (9) und die Formplatte (15) der Ausstoßseite (11) relativ zueinander beweglich sind, so dass die Kavitäten (8, 10) in beiden Formplatten (15, 16) in Überdeckung bringbar sind
- dass in der Kavität (10) auf der Ausstoßseite (11) mit mindestens einem in die und aus der Kavität (10) verschieblichen Schieber (19) ein weiterer Hohlraum (17) zeitweilig blockier- bzw. freigebbar ist

11. Spritzgießwerkzeug nach Anspruch 10, **dadurch gekennzeichnet, dass** die Formplatte (15) auf der Ausstoßseite (11) um eine senkrecht zur Oberfläche der Formplatten (15, 16) verlaufende Achse (14) schwenkbar ist.

12. Spritzgießwerkzeug nach Anspruch 10 oder 11, **dadurch gekennzeichnet, dass** ein vertikal zur Oberfläche der Formplatte (15) auf der Ausstoßseite (11) geführter Rahmen (24) die in der Trennebene (13) des Spritzgießwerkzeugs (12) liegende Öffnung der Kavität (8) umgibt und der Rahmen in Richtung der gegenüberliegenden Formplatte (16) mit einer Kraft beaufschlagt ist und dass ein vertikal zur Oberfläche der Formplatte (16) auf der Angußseite (9) geführter Rahmen (23) die in der Trennebene (13) des Spritzgießwerkzeugs (12) liegende Öffnung der Kavität (10) umgibt und der Rahmen in Richtung der gegenüberliegenden Formplatte (15) mit einer Kraft beaufschlagt ist.
